# EUROPÄISCHE PATENTANMELDUNG

(11) **EP 1 832 770 A2**
(43) Veröffentlichungstag der Anmeldung: **12.09.2007**
(21) Anmeldenummer: 07003944.1
(22) Anmeldetag: 27.02.2007
(51) Int. Cl.: F16D 13/58

(54) **Reibungskupplung**

(30) Priorität: 07.03.2006 DE 102006010335; 07.02.2007 DE 102007005984
(71) Anmelder: ZF FRIEDRICHSHAFEN AG, 88046 Friedrichshafen (DE)
(72) Erfinder: Knauer, Wolfgang, 97486 Königsberg (DE); Röll, Gerhard, 97499 Donnersdorf (DE); Vogt, Sebastian, 97616 Bad Neustadt (DE); Dörfler, Matthias, 97453 Schonungen (DE); Link, Achim, 97422 Schweinfurt (DE); Zottmann, Michael, 97464 Niederwerrn (DE)

(57) **Zusammenfassung**

Reibungskupplung, insbesondere für ein Kraftfahrzeug, mit einem Gehäuse (2), das mit einem Schwungrad (3) um eine gemeinsame Drehachse (4) rotiert und mit einer Brennkraftmaschine verbunden ist, eine im Gehäuse (2) drehfest aber axial verlagerbare Anpressplatte, einer Membranfeder (8) mit einem Tellerfederbereich (7) mit daran ausgebildeten Betätigungszungen (22) zur Verschwenkung der Membranfeder (8) um ihren Kippbereich (20), welche die Anpressplatte (5) mit einer Anpresskraft zur Beaufschlagung eines Reibbelages (6) beaufschlagen kann und sich an einem gehäuseseitigen Auflagebereich (9) abstützt, vom Gehäuse (2) sich erstreckende und mit diesem vernietete Halteelemente (9), die die Membranfeder (8) gegenüber dem Gehäuse (2) mit einem Schaftbereich (13) positionieren und an Durchgriffsbereichen (21) durchgreifen und auf der dem Gehäuse (2) abgewandten Seite der Membranfeder (8) einen Drahtring (12) halten, über den die Membranfeder (8) während eines Kuppelvorganges abgestützt wird, wobei die Halteelemente (9) Aufnahmebereiche (10) zum Halten des Drahtringes radial außerhalb des Schaftbereiches aufweisen, wobei der Drahtring (12) im Bereich seiner Anlage an der Membranfeder (8) gegenüber dem Aufnahmebereich (10) hervorsteht.

## Beschreibung

Die Erfindung betrifft eine Reibungskupplung insbesondere für ein Kraftfahrzeug, mit einem Gehäuse, das mit einem Schwungrad um eine gemeinsame Drehachse rotiert und mit einer Brennkraftmaschine verbunden ist, eine im Gehäuse drehfest aber axial verlagerbare Anpressplatte, einer Membranfeder mit einem Tellerfederbereich mit daran ausgebildeten Betätigungszungen zur Verschwenkung der Membranfeder um ihren Kippbereich, welche die Anpressplatte mit einer Anpresskraft zur Beaufschlagung eines Reibbelages beaufschlagen kann und sich an einem gehäuseseitigen Auflagebereich abstützt, vom Gehäuse sich erstreckende und mit diesem vernietete Halteelemente, die die Membranfeder gegenüber dem Gehäuse mit einem Schaftbereich positionieren und an Durchgriffsbereichen durchgreifen und auf der dem Gehäuse abgewandten Seite der Membranfeder einen Drahtring halten, über den die Membranfeder während eines Kuppelvorganges abgestützt wird.

Eine solche Kupplung ist beispielsweise aus dem deutschen Gebrauchsmuster DE 66 10 565 U bekannt. Um eine reibschlüssige Kopplung zwischen der Kupplungsscheibe einerseits und dem Schwungrad samt Anpressplatte andererseits herstellen zu können, ist die Anpressplatte mittels einer Membranfeder mit einer Axialkraft beaufschlagbar. Im eingerückten Zustand presst die Membranfeder die Anpressplatte gegen das Schwungrad, während im ausgerückten Zustand die axiale Anpresskraft der Membranfeder weggenommen werden kann. Hierzu weist das radial innenliegende Ende der Membranfeder eine Anzahl Federzungen auf, die mit einem Ausrücker verbunden sind, mit dem die Federzungen in Achsrichtung bewegt werden können. Die Membranfeder ist mittels einer Anzahl Distanzbolzen an dem Kupplungsgehäuse gelagert, so dass sich die Membranfeder zwar mit dem Kupplungsgehäuse mitdreht, jedoch in Abhängigkeit der Stellung des Ausrückers die Anpressplatte kraftbeaufschtagen kann, wobei die Membranfeder hierbei um ihre Lagerung an den Distanzbolzen verschwenkt wird. Hierzu durchsetzen die Distanzbolzen die Membranfeder an entsprechenden Ausnehmungen in der Feder. Um die Membranfeder im Bereich der Distanzbolzen relativ zum Kupplungsgehäuse axial festzulegen, sind Drahtringe oder Kippringe beidseits der Membranfeder durch den zylindrischen Schaft der Distanzbolzen gehalten, die auf diese Weise die Lagerstelle zur Verkippung der Membranfeder bilden.

Nachteilig ist bei dieser Lösung, dass die Bauraumverhältnisse sich ungünstig gestalten wobei diese zusätzlich durch die Mäterialgrenzen der Membranfeder und den Leistungsanforderungen begrenzt werden.

Der Erfindung liegt die **Aufgabe** zugrunde, eine Kupplungseinrichtung der eingangs genannten Art so weiterzubilden, dass eine einfache Bauart erreicht wird, bei der es dennoch möglich ist eine hohe Übertragungsfähigkeit zu erreichen.

Die **Lösung** dieser Aufgabe durch die Erfindung ist dadurch gekennzeichnet, dass die Halteelemente Aufnahmebereiche zum Halten des Drahtringes radial beabstandet zum Schaftbereich aufweisen, wobei der Drahtring im Bereich seiner Anlage an der Membranfeder gegenüber dem Aufnahmebereich hervorsteht.

Besonders vorteilhaft gestaltet sich die Erfindung, wenn die Halteelemente Aufnahmebereiche zum Halten des Drahtringes radial außerhalb des Schaftbereiches aufweisen, wobei der Drahtring im Bereich seiner Anlage an der Membranfeder gegenüber dem Aufnahmebereich hervorsteht. Durch die zum Schaftbereich der Halteelemente beanstandete Axiallagerung der Membranfeder kann das Hebelverhältnis zum Ein- und Auskuppeln der Reibungskupplung zwischen dem hierbei zum Schaftbereich beabstandet angeordneten Kippbereich der Membranfeder und dem Angriffspunkt eines Ausrücklagers oder Ausrücksystems am radial inneren Endbereich der Betätigungszungen auf gewünschte Weise beeinflusst werden. Wenn die Halteelemente Aufnahmebereiche zum Halten des Drahtringes radial außerhalb des Schaftbereiches aufweisen und die Membranfeder radial beabstandet zu ihren Übergang zwischen Tellerfederbereich und Betätigungszunge axial abstützen, ergibt sich vorteilhaft ein günstiges Hebelverhältnis hinsichtlich der maximalen Betätigungskraft eines Kuppelvorganges und im Bereich der Auflage der Membranfeder an der Anpressplatte ein geringer Platzbedarf zum Verschwenken. Hierbei kann vorteilhaft der Drahtring im Bereich seiner Anlage an der Membranfeder gegenüber dem Aufnahmebereich hervorstehen. Durch den radialen Abstand des Schaftbereiches gegenüber dem Aufnahmebereich oder Kippbereich und damit der Anlage der Membranfeder zeichnet sich die Erfindung gleichzeitig durch eine sehr hohe Anpresskraft der Membranfeder aus, da in den radialen Bereich zwischen Kippbereich und dem Schaftbereich sich ein Teilabschnitt des Tellerfederbereiches der Membranfeder merklich erstreckt. Der Tellerfederbereich erstreckt sich radial nach innen über den Aufnahmebereich und damit dem Drahtring des Halteelementes hinaus. Der Tellerfederbereich ist vorteilhafterweise gegenüber dem Schaftbereich lediglich insoweit beabstandet, als es zur Verschwenkung der Membranfeder während eines Kuppelvorganges erforderlich ist. So kann die Membranfeder verschwenken ohne, dass sie sich am Schaftbereich verklemmt.

Der erfinderische Gedanke wird auch angewandt bei einer Reibungskupplung, insbesondere für ein Kraftfahrzeug, mit einem Gehäuse, das mit einem Schwungrad um eine gemeinsame Drehachse rotiert und mit einer Brennkraftmaschine verbunden ist, eine im Gehäuse drehfest aber axial verlagerbare Anpressplatte, einer Membranfeder mit einem Tellerfederbereich und daran ausgebildeten Betätigungszungen zur Verschwenkung der Membranfeder um ihren Kippbereich, welche die Anpressplatte mit einer Anpresskraft zur Beaufschlagung eines Reibbelages beaufschlagen kann und sich an einem gehäuseseitigen Auflagebereich abstützt, vom Gehäuse sich erstreckende und mit diesem vernietete Halteelemente, die die Membranfeder gegenüber dem Gehäuse mit einem Schaftbereich positionieren und an Durchgriffsbereichen durchgreifen.

Als Lösung wird vorgeschlagen, dass radial beabstandet zum Schaftbereich Abstützbereiche an Halteelementen zum Halten der Membranfeder ausgebildet sind um die die Membranfeder während eines Kuppelvorganges verkippt und ein Abschnitt des Tellerfederbereiches während eines Kuppelvorganges radial innerhalb des Abstützbereiches unter diesen verschwenken kann. Durch das Vorsehen von Abstützbereichen, welche an den Halteelementen ausgebildet sind kann der Zusammenbau kostengünstig erfolgen, wobei sinngemäß die Vorteile und Variationen des Anspruchs 1 auch hier angewandt werden können. Wenn die Halteelemente Abstützbereiche zum Halten der Membranfeder radial beabstandet zum Schaftbereich aufweisen und die Membranfeder radial beabstandet zu ihren Übergang zwischen Tellerfederbereich und Betätigungszunge axial abstützen wobei die Membranfeder während eines Kuppelvorganges um die Abstützbereiche verkippt, ergibt sich vorteilhaft ein günstiges Hebelverhältnis hinsichtlich der maximalen Betätigungskraft eines Kuppelvorganges und im Bereich der Auflage der Membranfeder an der Anpressplatte ein geringer Platzbedarf zum Verschwenken. Durch den radialen Abstand des Schaftbereiches gegenüber dem Kippbereich und damit zur Anlage der Membranfeder zeichnet sich die Erfindung gleichzeitig durch eine sehr hohe Anpresskraft der Membranfeder aus, da in den radialen Bereich zwischen Kippbereich und Schaftbereich sich der Tellerfederbereich der Membranfeder hinein erstreckt. Der Tellerfederbereich erstreckt sich radial nach innen über den Aufnahmebereich und damit dem Drahtring beziehungsweise dem Abstützbereich des Halteelementes hinaus. Der Tellerfederbereich ist gegenüber dem Schaftbereich lediglich insoweit beabstandet, als es zur Verschwenkung der Membranfeder während eines Kuppelvorganges erforderlich ist. So kann die Membranfeder verschwenken ohne, dass sie sich am Schaftbereich verklemmt.

Als weitere Ausgestaltung wird vorgesehen, dass das Halteelement ausgehend von seinem Aufnahmebereich oder Abstützbereich in Richtung des Schaftbereiches einen Konturverlauf aufweist, welcher eine Anlage der Membranfeder bis zum ausgekuppelten Zustand an diesem Konturverlauf ausschließt. Insbesondere wenn dieser Konturverlauf derart ausgeformt ist, dass der zwischen Aufnahmebereich oder Abstützbereich und Schaftbereich sich erstreckende Tellerfederabschnitt bei einer Verschwenkung der Membranfeder beim Auskuppeln keinen Kontakt mit der zugewandten Oberfläche des Tellerfederbereiches erfährt, lassen sich große Verschwenkbewegungen verwirklichen. Vorteilhafterweise ist das Halteelement in diesem Bereich entsprechend ausgenommen. Es kann der Schaftbereich radial außen eine Kontur aufweisen, welche der Verschwenkbewegung der Membranfeder während eines Kuppelvorganges angepasst ist. Weiterhin kann vorgesehen sein, dass die Membranfeder bei Erreichen der Stellung, welche einem vollständigen Auskuppeln entspricht, an der Kontur der Halteelemente an einem Begrenzungsanschlag zur Anlage kommt, womit ein Überdrücken der Membranfeder über die maximale Auskuppelposition verhindert wird.

Um die höheren Anpresskräfte der Membranfeder verlustfrei beim Einkuppeln dosieren zu können wird vorgeschlagen, dass die Membranfeder im Bereich ihrer Betätigungszungen Versteifungssicken aufweist. Vorteilhaft erstrecken sich die Versteifungssicken hierbei bis in den Tellerfederbereich der Membranfeder. So ist insbesondere der radial außen an den Betätigungszungen von den Durchgriffsbereichen für die Halteelemente gebildete Abschnitt versteift und Durchbiegungsverluste sind reduziert insbesondere auch, wenn die Versteifungssicken sich radial bis über den Schaftbereich hinaus erstrecken.

Hierbei kann dann vorgesehen sein, dass die Breite der Halteelemente in Umfangsrichtung geringer als der Bauraum zwischen zwei benachbarten Versteifungssicken ist. So können sehr ausgeprägte Versteifungssicken eingebracht werden, welche axial sich überdecken mit den Halteelementen.

Um die Membranfeder am Gehäuse genau zu lagern, erfolgt die Zentrierung der Membranfeder am Gehäuse vermittels des Schaftbereichs der Halteelemente. Hierbei eignen sich insbesondere die in Umfangsrichtung weisenden Flächen des Schaftbereiches um ein Verklemmen der Membranfeder beim Kuppeln auszuschließen.

Um die Hebelverhältnisse zwischen den Auflagen der Membranfeder innerhalb der Reibungskupplung im eingekuppelten Zustand und während eines Kuppelvorganges den Erfordernissen einer leichten Betätigung und gleichzeitig hoher Anpresskraft optimieren zu können ist vorgesehen, dass der Aufnahmebereich oder Abstützbereich der Halteelemente und der gehäuseseitige Auflagebereich der Membranfeder auf unterschiedlichen Durchmessern angeordnet sind. So kann vorgesehen sein, dass der Aufnahmebereich beziehungsweise der dabei zugeordnete Drahtring oder Abstützbereich der Halteelemente auf einem ersten Radius R1 bezogen auf die Drehachse und der gehäuseseitige Auflagebereich der Membranfeder auf einem davon abweichenden Radius R2 angeordnet ist. Wenn der Radius R1 größer als der Radius R2 ist, ergibt sich ein günstiges Hebelverhältnis der Membranfederlagerung für die Betätigungszungen hinsichtlich einer geringen Ausrückkraft und zeitgleich kann der über den Radius R1 nach innen sich erstreckende Tellerfederabschnitt der Membranfeder eine hohe Anpresskraft ausüben. Dies gilt für Reibungskupplungen, bei denen die Membranfeder innerhalb des Gehäuses untergebracht ist. Für Reibungskupplungen mit auf der von der Anpressplatte abgewandten axialen Seite des Gehäuses angebrachten Membranfedern, also so genannte außenliegende Membranfedern, sind die Verhältnisse von R1 und R2 spiegelbildlich hinsichtlich ihrer Ausdehnung zu sehen. Hier wird dann R1 zu R2 und R2 zu R1.

Um die Lage und / oder Schrägstellung der Membranfeder im Gehäuse zumindest über einen Teilbereich der Lebensdauer der Reibbeläge zumindest annähernd konstant zu halten wird vorgeschlagen, dass die Reibungskupplung eine Vorrichtung zum automatischen Verschleißausgleich des Verschleißes der Reibbeläge aufweist. Diese Verschleißnachstellung kann dabei zwischen Membranfeder und Anpressplatte oder aber auch zwischen Membranfeder und Kupplungsgehäuse vorgesehen sein und dort wirken.

Die Erfindung wird nachfolgend in den Ausführungsbeispielen näher erläutert. Es zeigen:
- Fig. 1:: einen teilweisen Radialschnitt durch eine Kraftfahrzeugkupplung;
- Fig. 2:: einen Teilausschnitt einer Draufsicht der Kraftfahrzeugkupplung auf die Membranfeder;
- Fig. 3:: eine perspektivische Ansicht eines erfindungsgemäßen Halteelementes;
- Fig. 4:: einen teilweisen Radialschnitt durch eine weitere Kraftfahrzeugkupplung.

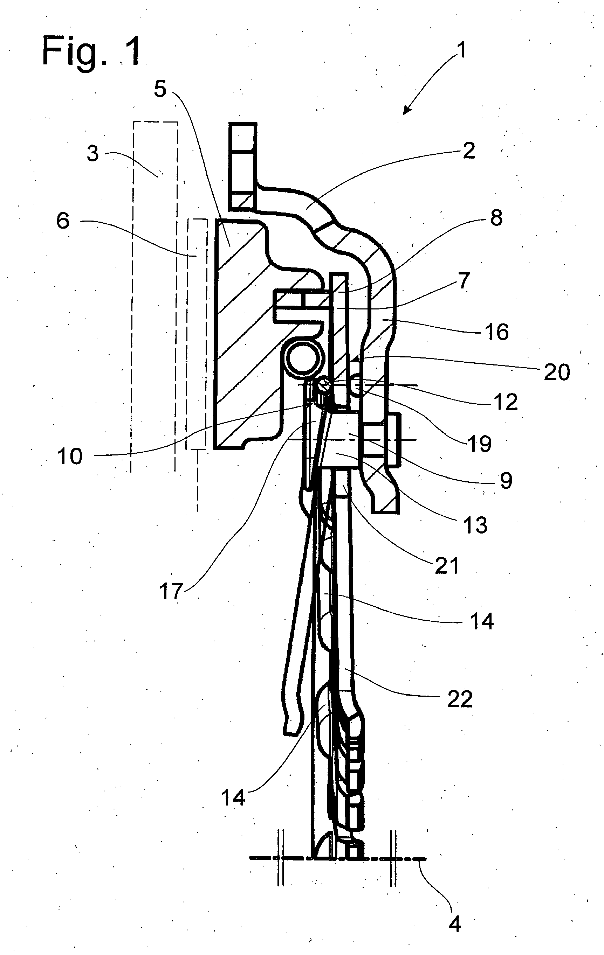

Bei der in Figur 1 gezeigten Zeichnung einer Reibungskupplung (1) ist nur der oberhalb der Drehachse (4) befindliche Teil dargestellt. Hierbei ist das Gehäuse (2) zusammenwirkend mit einem hier gestrichelt angedeuteten, auf der dem Gehäuseboden (16) abgewandten Seite der Anpressplatte (5) an einer bezüglich einer Kupplungsscheibe angeordneten Reibbelag (6) und einem Schwungrad (3) an einem Motor, insbesondere einer Brennkraftmaschine, angebaut. Die Anpressplatte (5) ist innerhalb des Gehäuses (2) zum Beispiel über Tangentialblattfedern drehfest aber axial beweglich angeordnet. Hierbei wirken die Tangentialblattfedern mit einer in Richtung Gehäuseboden (16) gerichteten Kraft auf die Anpressplatte (5). Im Bereich des Gehäusebodens (16) sind über den Umfang verteilt Halteelemente (9) zur Befestigung einer Membranfeder (8) mit dem Gehäuse (2) verbunden. Die hier gezeigten Halteelemente (9) sind mit dem Gehäuseboden (16) vernietet, können aber auch durch Schweißen, insbesondere Reibschweißen oder Punktschweißen am Gehäuse (2) befestigt sein. Die Membranfeder weist im radial äußeren Erstreckungsbereich ihren Tellerfederbereich (7) und vom radial inneren Ende des Tellerfederbereichs (7) aus sich erstreckende Betätigungszungen (22) zum Zusammenwirken mit einem Ausrücksystem wie einem Ausrücklager auf. Radial außen stützt sich der Tellerfederbereich (7) der Membranfeder an der Anpressplatte (5) ab, wobei an der Anpressplatte (5) eine Vorrichtung zum automatischen Verschleißausgleich (15) des Reibbelagverschleißes vorgesehen ist. Weiterhin sind insbesondere im radial äußeren Bereich der Betätigungszungen (22) Versteifungssicken (14) zur Verringerung der Durchbiegung bei Kraftbeaufschlagung der Betätigungszungen (22) eingeprägt. Die Halteelemente (9) durchgreifen mit ihrem Schaftbereich (13) die Membranfeder an Durchgriffsbereichen (21) und Stützen diese über einen Drahtring (12) ab, welcher vermittels von an den Halteelementen (9) ausgebildeten Aufnahmebereichen (10) gehalten wird. Gehäuseseitig wird die Membranfeder über einen Auflagebereich (19) abgestützt, welcher integral mit dem Gehäuseboden (16) oder durch einen separat eingelegten Drahtring ähnlich dem am Halteelement (9) verwendeten Drahtring (12) ausgebildet sein kann.

Ausgehend vom eingekuppelten Zustand der Reibungskupplung (1) wird bei einem Kuppelvorgang die Membranfeder (8) um ihren durch den gehäuseseitigen Auflagebereich (19) und den Aufnahmebereichen (10) mit dem Drahtring (12) gebildeten Kippbereich (20) mit ihren Betätigungszungen (22) in Richtung Schwungrad (3) verkippt. Der sich zwischen dem gehäuseseitigen Auflagebereich (19) und der Anpressplatte (5) abstützende Tellerfederbereich (7) verkippt hierbei um den Auflagebereich (19) und der radial äußere Tellerfederbereich (7) verschwenkt von seiner Anlage an der Anpressplatte (5) weg womit mit zunehmenden Auskuppeln der Reibschluss an den Reibbelägen (6) aufgehoben wird.
Bei der in Fig. 1 dargestellten Reibungskupplung (1) sind die an den Haltelementen ausgebildeten Aufnahmebereiche (10) radial beabstandet zu sich durch den Durchgriffsbereichen (21) der Membranfeder erstreckenden Schaftbereichen (13). Hierbei erstreckt sich der radiale Abstand insoweit, dass die Anlage der Membranfeder an dem Drahtring (12) des Halteelementes (9) innerhalb ihres Tellerfederbereichs (7) liegt. Der verbleibende Radialabstand- zwischen den Schaftbereichen (13) von zwischen Betätigungszungen (22) hindurchgreifenden Halteelementen (9) und den radial äußeren Bereich der Durchgriffsbereiche (21) als Endbereich der Betätigungszungen (22) ist so groß als bei einem Betrieb der Kupplung hier nicht die Membranfeder (8) mit dem Schaftbereich (13) verklemmt. Hierzu zählt einerseits die elastische Verformung der Membranfeder (8) bei einem Kuppelvorgang als auch die Veränderung der Stellung der Membranfeder (8) im eingekuppelten Zustand infolge Reibbelagverschleiß. In Figur 1 ist der am Halteelement (9) ausgebildete Aufnahmebereich (10) zum Halten des Drahtringes (12) radial beabstandet zum radial äußeren Ende des Durchgriffsbereiches (21). Hierbei kann aber auch vorteilhaft vorgesehen sein, dass der am Halteelement (9) ausgebildete Aufnahmebereich (10) zum Halten des Drahtrings (12) radial beabstandet ist zum radial äußeren Ende der Betätigungszungen (22). Das radial äußere Ende der Betätigungszungen (22) wird vorteilhaft gebildet durch das Ende des Spaltes zwischen zwei Betätigungszungen (22). Das radial äußere Ende der Betätigungszurigen (22) endet dort, wo der Tellerfederbereich (7) der Membranfeder (8) beginnt. Die Membranfeder (8) erstreckt sich erfindungsgemäß mit einem Teil des Tellerfederbereichs (7) radial innerhalb der Auflage des Drahtrings (12) am Halteelement (9).
In alternativer Ausführung können die am Gehäuse (2) angeordneten Halteelemente (9) mit den Aufnahmebereichen (10) auch durch eine mehrteilige Ausgestaltung verwirklicht werden. Wobei vorteilhafter weise die Halteelemente (9) am Gehäuse (2) fest angebrachte Distanzbolzen, also mit einem gegenüber dem Schaftbereich (13) in radialer Richtung überstehende Kopfbereiche (17) aufweisen und der Aufnahmebereich (10) durch einen weiteren zwischen Drahtring (12) und Halteelement eingebrachten Haltering ausgebildet werden.

Die Erfindung kennzeichnet sich ebenfalls durch eine Reibungskupplung (1) entsprechend dem Oberbegriff des Anspruches 1 aus, bei der der zwischen Membranfeder (8) und Halteelement eingebrachte Drahtring (12) radial beabstandet zu dem radial inneren Endbereich des Tellerfederbereichs (7) der Membranfeder (8) ist.
Der Drahtring (12) steht mit seiner Anlage an der Membranfeder (8) gegenüber dem Aufnahmebereich (10) hervor um ein Verschwenken dieser bei einem Auskuppelvorgang zu ermöglichen.

Bei der Ausgestaltung des Halteelementes (9) im Bereich des Aufnahmebereiches (10) für den Drahtring (12) entnimmt man der Fig. 1, das der in Richtung auf die Membranfeder (8) weisende Konturverlauf insoweit gegenüber der Anlage des Drahtrings (12) an der Membranfeder (8) zurück genommen ist, dass die Membranfeder (8) während der Auskuppelbewegung zwischen Drahtring (12) und Schaftbereich (13) nicht zur Anlage kommt. Das Halteelement (9) weist ausgehend von seinem Aufnahmebereich (10) oder Abstützbereich (11) in Richtung des Schaftbereiches (13) einen Konturverlauf auf, welcher eine Anlage der Membranfeder (8) bis zum ausgekuppelten Zustand an diesem Konturverlauf ausschließt. Mit Beendigung der Auskuppelbewegung liegt dann die Membranfeder (8) an dem Halteelement (9) an womit die Verschwenkbewegung der Membranfeder (8) begrenzt wird. Weiterhin ist das Halteelement ausgehend vom Abstützbereich (11) oder Aufnahmebereich (10) nach radial innen im gegenüber dem Schaftbereich (13) hervorstehenden Abschnitt, also dem Endbereich des Halteelementes (9), welches vom Gehäuseboden (16) wegweist, gegenüber der Membranfeder, (8) in seinem axialen Abstand vergrößert. Der Aufnahmebereich (10) beziehungsweise Abstützbereich (11) weist im Auflagebereich (19) seine größte axiale Ausdehnung in Richtung auf die Membranfeder (8) auf und vergrößert nach radial /innen seinen Axialabstand von dieser. Damit ist der Kopfbereich (17) der Halteelemente (9) entsprechend dreiecksförmig Ausgestaltet:

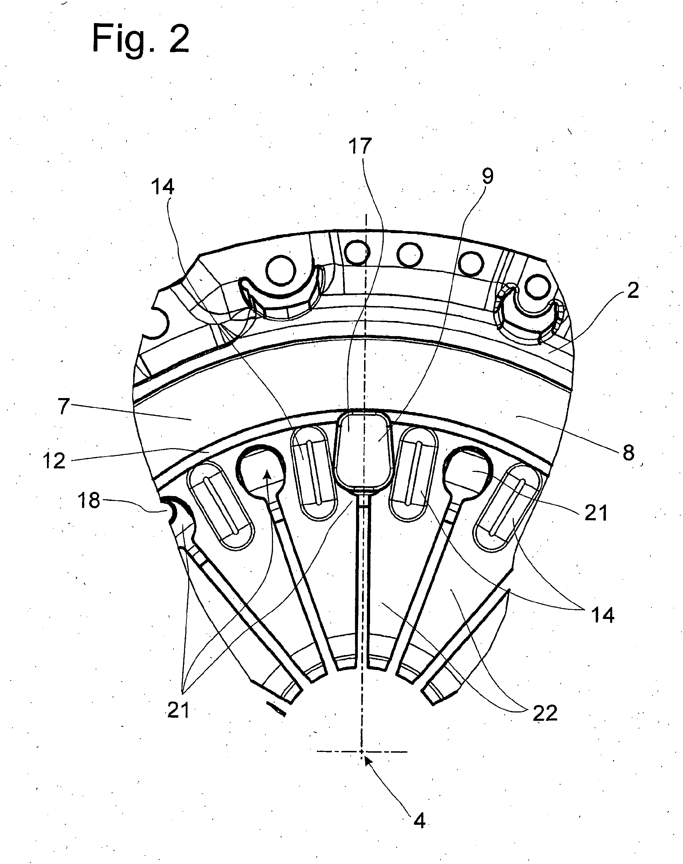

Die an den Betätigungszungen (22) der Membranfeder (8) ausgebildeten Versteifungssicken (14) verhindern ein Durchbiegen der Betätigungszungen (22) besonders im Abschnitt der Durchgriffsbereiche (21). Sie erstrecken sich innerhalb der Betätigungszungen (22) über das Ausmaß der Durchgriffsbereiche hinaus. Auch sind die Versteifungssicken (14) bis in den Tellerfederbereich (7) der Membranfeder (8) hinein erstreckt, womit die Membranfeder (8) steifer im Übergangsbereich Betätigungszungen (22) zu Tellerfederbereich (7) wird. Aus Fig. 2 entnimmt man, dass sich die Versteifungssicken (14) radial über den Schaftbereich (13) hinaus erstrecken aber in Umfangsrichtung einen ausreichenden Abstand zu den benachbarten Halteelementen (9) aufweisen. Der Bauraum zwischen zwei benachbarten Versteifungssicken (14) ist größer als die Breite eines Halteelementes (9) in diesem Bereich. Um die Membranfeder (8) gegenüber der gemeinsamen Drehachse (4) mit dem Gehäuse (2) ausreichend zu halten erfolgt die Zentrierung über die Schaftbereiche (13) der Halteelemente (9). Hier liegen bevorzugt die in-Umfangsrichtung weisenden Abschnitte an den Durchgriffsbereichen (21) an. Im Ausführungsbeispiel nach Figur 2 erstrecken sich die Versteifungssicken (14) radial über die Betätigungszungen (22) hinaus in den Tellerfederbereich (7) hinein bis an den Drahtring (12) heran. Es kann jedoch auch vorgesehen sein, dass zumindest einige der Versteifungssicken (14) radial in den Tellerfederbereich (7) sich erstrecken bis über die Anlage des Drahtrings (12) an der Membranfeder (8) im Bereich der Halteelemente (9). Hier kann vorgesehen sein, dass der Drahtring (12) insoweit ausgeformt ist, dass er dem Konturverlauf der Versteifungssicke (14) in diesem Radialbereich entsprechend verläuft. Der Drahtring (12) weicht hier von einer idealen geraden Kreisform ab. Es kann vorgesehen sein, dass der Drahtring (12) im, Überdeckungsbereich mit zumindest einer Versteifungssicke (14) in Axialrichtung diesen übergreift. Der Drahtring (14) weist im Überdeckungsbreich mit der Versteifungssicke (14) eine entsprechende Ausbiegung auf. Es kann aber alternativ vorgesehen sein, dass der Drahtring (12) an zumindest einer Versteifungssicke (14), welche radial in den Bereich der Anlage des Drahtrings (14) an der Membranfeder (8) in Überdeckung mit dem Halteelement (9) hinein reicht, diese in Radialrichtung umgreift. Der Drahtring (12) weist daher, um eine Versteifungssicke (14) radial außen zu umgreifen, eine Verformung auf und ist entsprechend um die Versteifungssicke (14) gebogen.

In Figur 2 wird ein Teilausschnitt einer Draufsicht der Kraft fahrzeugkupplung auf die Membranfeder (8) aus Richtung des Motors abgebildet. Die Halteelemente (9) sind über den Umfang verteilt in einer Anzahl der Durchgriffsbereiche eingebracht, wobei eine Anzahl der Durchgriffsbereiche frei bleibt. Im gezeigten Beispiel sind dies jeweils die beidseits eines Halteelementes (9) nächstliegenden Durchgriffsbereiche. Das Halteelement übergreift hier mit seinem Kopfbereich (17) den Drahtring (12) und sichert so die Membranfeder (8) gegenüber dem Gehäuse (2). Die beidseits des gezeigten Halteelementes (9) an den Betätigungszungen (22) der Membranfeder (8) ausgebildeten Versteifungssicken (14) erstrecken sich insoweit bis zu der Auflage des Drahtrings (12) an der Membranfeder (8) in den Tellerfederbereich (7) hinein.

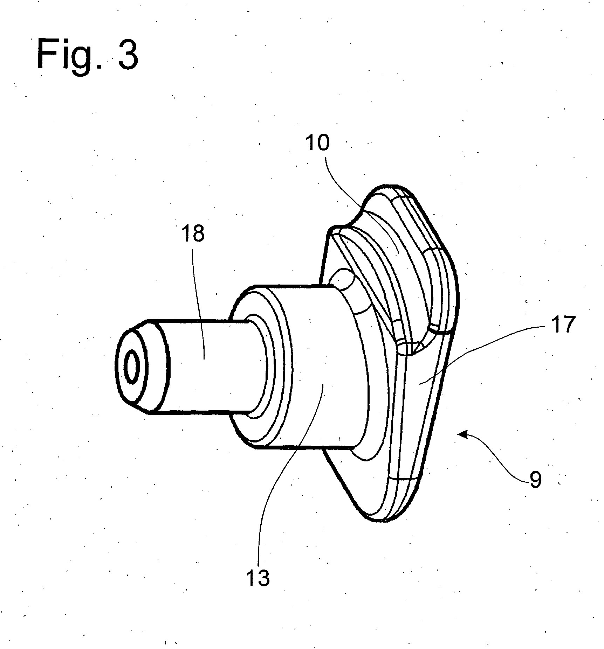

Die Figur 3 zeigt eine perspektivische Ansicht eines erfindungsgemäßen Halteelementes (9) bei dem der Schaftbereich (13) im Kopfbereich (17) übergeht in den Aufnahmebereich (10) zur Abstützung des Drahtrings (12). Hierbei weist der Ausnahmebereich einen radialen Abstand zum Schaftbereich (13) auf. Dieser radiale Abstand erststreckt sich im eingebauten Zustand des Halteelementes (9) entsprechend Figur 2 in den Tellerfederbereich (7) der Membranfeder (8).

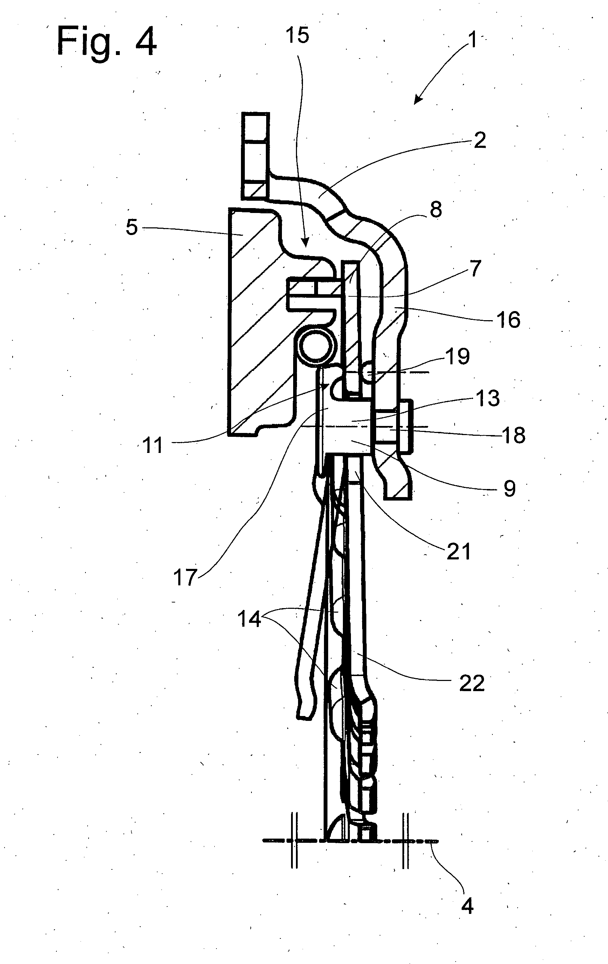

In Figur 4 ist abweichend zu der Ausgestaltung nach Figur 1 das Halteelement (9) derart ausgebildet, dass sich ausgehend vom Schaftbereich (13) nach radial außen anstatt eines Aufnahmebereiches (10) eine Abstützbereich (11) anschließt. Die mit gleichen Nummern bezifferten Einzelteile sind entsprechend identisch beziehungsweise gleichwirkend mit den Bauteilen der Figur 1. Dieser Abstützbereich (11) führt zu einer direkten Anlage des Halteelementes (9) im Auflagebereich (19) der am Tellerfederbereich (7) der Membranfeder (8). Der dem Halteelement (9) zugeordnete Drahtring (12) wird eingespart. Aus der Figur 4 erkennt man, dass radial beabstandet zum Schaftbereich (13) Abstützbereiche (11) an Halteelementen (9) zum Halten der Membranfeder (8) ausgebildet sind, um die die Membranfeder (8) während eines Kuppelvorganges verkippt und ein Abschnitt des Tellerfederbereiches (7) während eines Kuppelvorganges radial innerhalb des Abstützbereiches (11) unter diesen verschwenken kann. Der Abstützbereich (11) ist als gegenüber dem Kopfbereich (17) in Richtung der Membranfeder (8) hervorstehende Schulter ausgebildet, welche gegenüber der Anlage an der Membranfeder (8) eine ähnliche Kontur wie ein Drahtring (12) aufweist. In Umfangsrichtung weist der Abstützbereich (11) vorteilhaft eine Krümmung entsprechend dem Abstand von der Drehachse (4) auf. Der gehäuseseitige Auflagebreich (19) kann bei der Ausgestaltung entsprechend Figur 4 als seprat eingelegter Drahtring ausgeführt sein, welcher eine elastische und federvorgespannte Einspannung der Membranfeder (8) zwischen dem Auflagebereich (19) dem Abstützbereich (11) ermöglicht. Hierzu kann dieser Drahtring gewellt ausgeführt sein. Durch die Anordnung mehrerer über den Umfang verteilten Halteelemente (9) mit daran ausgebildeten Abstützbereichen (11) wird der Drahtring (12) eingespart, die Membranfeder (8) aber sicher gehalten. Das Rotationsträgheitsmoment sinkt. Für besonders starke Membranfedern (8) kann jedoch vorgesehen sein, dass im Gegensatz zu Figur 4 nicht jeder zweite Durchgriffsbereich (21) von einem Halteelement (9) durchgriffen wird sondern jeder oder zumindest mehr als die Hälfte der Durchgriffsbreiche (21) von Halteelementen (9) durchgriffen werden.
Weiterhin kann bei der Ausführung entsprechend Figur 1 oder auch insbesondere nach Figur 4 vorgesehen sein, dass die Halteelemente (9) nicht mittels eines Nietabschnitts (18) gemäß Figur 3 mit dem Gehäuse (2) vernietet sind sondern vielmehr der Nietabschnitt (18) entfällt. Die entsprechend kürzer ausfallenden Halteelemente (9) nach Figur 1 oder 4 werden dann mittels Schweißen mit dem Gehäuse (2) verbunden. Hierbei kommt insbesondere das Reibschweißen oder Widerstandsschweißen in Betracht.

### Bezugszeichenliste:

- 1: Reibungskupplung
- 2: Gehäuse
- 3: Schwungrad
- 4: Drehachse
- 5: Anpressplatte
- 6: Reibbelag
- 7: Tellerfederbereich
- 8: Membranfeder
- 9: Halteelemente
- 10: Aufnahmebereiche
- 11: Abstützbereich
- 12 -: Drahtring
- 13: Schaftbereich
- 14: Versteifungssicken
- 15: Vorrichtung zum automatischen Verschleißausgleich
- 16: Gehäuseboden
- 17: Kopfbereich
- 18: Nietabschnitt
- 19: Auflagebereich
- 20: Kippbereich
- 21: Durchgriffsbereichen
- 22: Betätigungszungen

## Patentansprüche

1. Reibungskupplung, insbesondere für ein Kraftfahrzeug, mit
- einem Gehäuse (2), das mit einem Schwungrad (3) um eine gemeinsame Drehachse (4) rotiert und mit einer Brennkraftmaschine verbunden ist,
- eine im Gehäuse (2) drehfest aber axial verlagerbare Anpressplatte (5),
- einer Membranfeder (8) mit einem Teherfederbereich (7) mit daran ausgebildeten Betätigungszungen (22) zur Verschwenkung der Membranfeder (8) um ihren Kippbereich (20), welche die Anpressplatte (5) mit einer Anpresskraft zur Beaufschlagung eines Reibbelages (6) beaufschlagen kann und sich an einem gehäuseseitigen Auflagebereich (19) abstützt,
vom Gehäuse (2) sich erstreckende und mit diesem vernietete Halteelemente (9), die die Membranfeder (8) gegenüber dem Gehäuse (2) mit einem Schaftbereich (13) positionieren und an Durchgriffsbereichen (21) durchgreifen und auf der dem Gehäuse (2) abgewandten Seite der Membranfeder (8) einen Drahtring (12) halten, über den die Membranfeder (8) während eines Kuppelvorganges abgestützt wird,
**dadurch gekennzeichnet, dass** die Halteelemente (9) Aufnahmebereiche (10) zum Halten des Drahtringes radial außerhalb des Schaftbereiches (13) aufweisen, wobei der Drahtring (12) im Bereich seiner Anlage an der Membranfeder (8) gegenüber dem Aufnahmebereich (10) hervorsteht.

2. Reibungskupplung, insbesondere für ein Kraftfahrzeug, mit
einem Gehäuse (2), das mit einem Schwungrad (3) um eine gemeinsame Drehachse (4) rotiert und mit einer Brennkraftmaschine verbunden ist,
- eine im Gehäuse (2) drehfest aber axial verlagerbare Anpressplatte (5),
- einer Membranfeder (8) mit einem Tellerfederbereich (7) und daran ausgebildeten Betätigungszungen (22) zur Verschwenkung der Membranfeder (8) um ihren Kippbereich (20), welche die Anpressplatte (5) mit einer Anpresskraft zur Beaufschlagung eines Reibbelages (6) beaufschlagen kann und sich an einem gehäuseseitigen Auflagebereich (19) abstützt,
- vom Gehäuse (2) sich erstreckende und mit diesem vernietete Halteelemente (9), die die Membranfeder (8) gegenüber dem Gehäuse (2) mit einem Schaftbereich (13) positionieren und an Durchgriffsbereichen (21) durchgreifen
**dadurch gekennzeichnet, dass** radial beabstandet zum Schaftbereich (13) Abstützbereiche (11) an Halteelementen (9) zum Hatten der Membranfeder (8) ausgebildet sind um die die Membranfeder (8) während eines Kuppelvorganges verkippt und ein Abschnitt des Tellerfederbereiches (7) während eines Kuppelvorganges radial innerhalb des Abstützbereiches (11) unter diesen verschwenken kann,

3. Reibungskupplung nach Anspruch 1 oder 2,
**dadurch gekennzeichnet, dass** das Hatteelement (9) ausgehend von seinem Aufnahmebereich (10) oder Abstützbereich (11) in Richtung des Schaftbereiches (13) einen Konturverlauf aufweist, welcher eine Anlage der Membranfeder (8) bis zum ausgekuppelten Zustand an diesem Konturverlauf ausschließt.

4. Reibungskupplung nach einem der Ansprüche 1 bis 3,
**dadurch gekennzeichnet, dass** der Schaftbereich radial außen eine Kontur aufweist, welche der Verschwenkbewegung der Membranfeder während eines Kuppelvorganges angepasst ist.

5. Reibungskupplung nach einem der vorhergehenden Ansprüche,
**dadurch gekennzeichnet, dass** das Halteelement (9) ausgehend vom Abstützbereich (11) oder Aufnahmebereich (10) nach radial innen im gegenüber dem Schaftbereich (13) hervorstehenden Abschnitt gegenüber der Membranfeder (8) den axialen Abstand vergrößert.

6. Reibungskupplung nach einem der vorhergehenden Ansprüche,
**dadurch gekennzeichnet, dass** die Membranfeder (8) im Bereich ihrer Betätigungszungen (22) Versteifungssicken (14) aufweist.

7. Reibungskupplung nach Anspruch 6,
**dadurch gekennzeichnet, dass** die Versteifungssicken (14) sich bis in den Tellerfederbereich (7) der Membranfeder (8) erstrecken.

8. Reibungskupplung nach Anspruch 6 oder 7,
**dadurch gekennzeichnet, dass** die Versteifungssicken (14) sich radial bis über den Schaftbereich (13) hinaus erstrecken.

9. Reibungskupplung nach einem der Ansprüche 6 bis 8,
**dadurch gekennzeichnet, dass** die Breite der Halteelemente (9) in Umfangsrichtung geringer als der Bauraum zwischen zwei benachbarten Versteifungssicken (14) ist.

10. Reibungskupplung nach einem der vorhergehenden Ansprüche,
**dadurch gekennzeichnet, dass** die Zentrierung der Membranfeder (8) am Gehäuse (2) vermittels dem Schaftbereich (13) der Halteelemente (9) erfolgt.

11. Reibungskupplung nach einem der vorhergehenden Ansprüche,
**dadurch gekennzeichnet, dass** der Aufnahmebereich (10) oder Abstützbereich (11) der Halteelemente (9) und der gehäuseseitige Auflagebereich (19) der Membranfeder (8) auf unterschiedlichen Durchmessern angeordnet sind.

12. Reibungskupplung nach einem der vorhergehenden Ansprüche,
**dadurch gekennzeichnet, dass** der Aufnahmebereich (10) oder Abstützbereich (11) zumindest um einen Betrag radial außerhalb des Schaftbereiches (13) angeordnet ist, der zumindest in etwa der Blechstärke der Membranfeder (8) entspricht.

13. Reibungskupplung nach einem der vorhergehenden Ansprüche,
**dadurch gekennzeichnet, dass** an-der Anpressplatte (5) eine Vorrichtung zum automatischen Verschleißausgleich (15) des Verschleißes von Reibbelägen (6) vorgesehen ist.
